(19) Europäisches Patentamt
European Patent Office
Office européen des brevets

(11) EP 1 643 230 B1

(12) **FASCICULE DE BREVET EUROPEEN**

(45) Date de publication et mention de la délivrance du brevet:
**28.04.2010 Bulletin 2010/17**

(51) Int Cl.:
***G01M 3/28*** *(2006.01)* ***G01M 3/32*** *(2006.01)*

(21) Numéro de dépôt: **05292038.6**

(22) Date de dépôt: **30.09.2005**

(54) **Procédé et dispositif de contrôle d'étanchéité d'une enceinte contenant un gaz sous pression**

Verfahren und Vorrichtung zur Kontrolle der Dichtheit einer Umhüllung enthaltend ein Druckgas

Process and device for the tightness control of an enclosure comprising pressurized gas

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.10.2004 FR 0410414**

(43) Date de publication de la demande:
**05.04.2006 Bulletin 2006/14**

(73) Titulaire: **GDF SUEZ**
**75008 Paris (FR)**

(72) Inventeur: **Strainchamps, Christophe**
**31770 Colomiers (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**US-A- 4 675 834** **US-A- 5 892 148**
**US-B1- 6 205 846**

- **PATENT ABSTRACTS OF JAPAN vol. 010, no. 038 (P-428), 14 février 1986 (1986-02-14) & JP 60 183536 A (NIPPON DRY CHEMICAL KK), 19 septembre 1985 (1985-09-19)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 643 230 B1

## Description

La présente invention concerne un procédé et un dispositif de contrôle d'étanchéité d'une enceinte contenant un gaz sous pression et comprenant une paroi dont une partie au moins est en contact avec une ambiance externe dont la température est variable.

Dans le cas de l'exploitation de réservoirs ou de canalisations de distribution de gaz dont au moins une partie est en contact avec l'atmosphère ambiante mais qui peuvent cependant comporter des parties enterrées importantes, on a besoin de contrôler régulièrement l'étanchéité des parois, même si ces parois sont réalisées en des matériaux réputés fiables, comme par exemple le polyéthylène.

Une difficulté réside dans le fait que si les contrôles s'effectuent à partir d'observations de la pression du gaz à l'intérieur du réservoir ou de la canalisation, il n'est pas facile de savoir quelle est la part de l'évolution de la pression liée à des changements de température et quelle est la part de l'évolution de la pression dont l'origine est due à un défaut d'étanchéité de la paroi du réservoir ou de la canalisation.

De plus, dans le cas de réservoirs ou canalisations au moins partiellement enterrés, il est difficile d'effectuer des mesures de température à l'intérieur même de la partie enterrée de l'enceinte contenant du gaz.

On a déjà proposé, dans le document de brevet US 4 670 847, d'observer des variations de pression dans un réservoir dont l'étanchéité est à contrôler afin de détecter d'éventuelles fuites dans la paroi de ce réservoir. Selon ce procédé connu, on effectue un ensemble de mesures et on prend en considération une moyenne de ces mesures afin de corriger des erreurs dues à divers facteurs. Le cas échéant, le contrôle implique la comparaison avec un réservoir de référence.

Ce procédé s'applique cependant à des réservoirs lors de leur fabrication et ne permet pas de contrôle in situ pour un réservoir ou une canalisation soumis à des variations de température.

Dans le document de brevet US 4 675 834 on a proposé un dispositif de contrôle d'étanchéité d'un container.

La présente invention vise à remédier aux inconvénients ci-dessus et à permettre un contrôle fiable in situ de l'étanchéité d'un réservoir ou d'une canalisation déjà en place, avec une quantification de la fuite éventuelle occasionnée par un défaut d'étanchéité.

L'invention permet de s'affranchir des évolutions de pression dues à la température extérieure et s'applique également à des réservoirs ou des canalisations dont la majeure partie est enterrée, dès lors qu'une partie au moins de ce réservoir ou de cette canalisation est en contact avec une ambiance externe.

L'invention vise encore à permettre d'effectuer une détection de fuite in situ sur des réservoirs ou canalisations partiellement enterrés sans qu'il soit besoin d'effectuer des mesures sur les parties enterrées difficilement accessibles.

Ces buts sont atteints grâce à un procédé selon la revendication 1 de contrôle d'étanchéité d'une enceinte contenant un gaz sous pression et comprenant une paroi dont une partie au moins est en contact avec une ambiance externe dont la température est variable, caractérisé en ce qu'il comprend les étapes suivantes :

(a) introduire dans l'enceinte un gaz sous pression,

(b) mesurer entre des instants prédéterminés $t_1$ et $t_2$ un ensemble de valeurs d'un premier paramètre constitué par la pression P(t) du gaz à l'intérieur de l'enceinte, en fonction du temps,

(c) mesurer entre les mêmes instants prédéterminés $t_1$ et $t_2$ un ensemble de valeurs d'un deuxième paramètre constitué par la température ambiante Ta(t) de l'ambiance externe avec laquelle la paroi de l'enceinte est en contact, en fonction du temps,

(d) exprimer le premier paramètre P(t) en fonction du deuxième paramètre Ta(t) pour les ensembles de valeurs mesurées des premier et deuxième paramètres P(t), Ta(t) dans l'intervalle de temps $[t_1, t_2]$ défini par lesdits instants prédéterminés $t_1$, $t_2$, effectuer une régression et calculer la corrélation entre les premier et deuxième paramètres P (t), Ta(t),

(e) effectuer un décalage dans le temps d'au moins l'un des ensembles de valeurs des premier et deuxième paramètres P(t), Ta(t) dans l'intervalle de temps $[t_1, t_2]$ défini par lesdits instants prédéterminés $t_1$, $t_2$ jusqu'à obtenir entre des ensembles de valeurs rephasées des premier et deuxième paramètres P(t) et Ta(t), un déphasage $\varphi$ donnant la meilleure corrélation entre ces paramètres P(t) et Ta(t),

(f) à partir des ensembles de valeurs rephasées des premier et deuxième paramètres P(t) et Ta(t), ajouter à chaque valeur rephasée du premier paramètre P(t) une quantité $\Delta P(t) = \delta \times t$ représentant la perte de pression qui aurait été perdue avec une fuite par unité de temps égale à $\delta$, et déterminer la fuite par unité de temps $\delta$ qui permet d'obtenir la meilleure corrélation entre l'ensemble de valeurs du premier paramètre P(t) rephasées et regonflées

par une quantité $\Delta P(t)$ et l'ensemble de valeurs du deuxième paramètre Ta(t) rephasées, et

(g) identifier une fuite si la meilleure corrélation entre l'ensemble de valeurs du premier paramètre P(t) rephasées et regonflées par une quantité $\Delta P(t)$ et l'ensemble de valeurs du deuxième paramètre Ta(t) rephasées est non nulle.

A titre d'exemple, lors de l'étape e) de décalage dans le temps d'au moins l'un des ensembles de valeurs des premier et deuxième paramètres P(t) et Ta(t), la méthode de corrélation employée est la méthode des moindres carrés. Toutefois, l'obtention du déphasage $\varphi$ pour lequel la corrélation est optimale pourra être plus rapide si la recherche est effectuée par dichotomie.
De la même façon, à titre d'exemple, lors de l'étape f) de regonflage des valeurs du premier paramètre P(t) rephasées, la recherche de la meilleure corrélation entre l'ensemble de valeurs du premier paramètre P(t) rephasées et regonflées par une quantité $\Delta P(t)$ et l'ensemble de valeurs du deuxième paramètre Ta(t) rephasées est effectuée par la méthode des moindres carrés. Toutefois, là encore, on peut obtenir le regonflage $\Delta P(t)$ de façon plus rapide en procédant par dichotomie.
Avantageusement, lesdits ensembles de valeurs du premier paramètre P(t) et du deuxième paramètre Ta(t) acquises lors des mesures comprennent chacun entre quelques milliers et quelques dizaines de milliers de valeurs acquises.
L'intervalle de temps $[t_1, t_2]$ défini par lesdits instants prédéterminés $t_1$, $t_2$ peut avoir une durée finie quelconque dès lors que l'échantillonnage est suffisamment précis. Le procédé est parfaitement adapté pour des contrôles d'étanchéité d'une canalisation d'une durée comprise entre 4h et 48h et de préférence entre 6h et 12h.
Le procédé selon l'invention peut être appliqué à tout type de réservoir fermé et plus particulièrement à une canalisation enterrée de transport ou de distribution de gaz sous pression, cette canalisation pouvant être en tout type de matériau, y compris en particulier le polyéthylène.
L'invention concerne également un dispositif selon la revendication 12 de contrôle d'étanchéité d'une enceinte contenant un gaz sous pression et comprenant une paroi dont une partie au moins est en contact avec une ambiance externe dont la température est variable, caractérisé en ce qu'il comprend :

(a) des moyens de mesure d'un ensemble de valeurs d'un premier paramètre constitué par la pression P(t) du gaz à l'intérieur de l'enceinte, en fonction du temps,

(b) des moyens de mesure d'un ensemble de valeurs d'un deuxième paramètre constitué par la température ambiante Ta(t) de l'ambiance externe avec laquelle la paroi de l'enceinte est en contact, en fonction du temps,

(c) une unité centrale de traitement,

(d) des unités de mémoire,

(e) des moyens de calcul de la corrélation entre les premier et deuxième paramètres P(t), Ta(t), à partir d'ensembles de valeurs mesurées des premier et deuxième paramètres P(t), Ta(t) à des instants déterminés,

(f) des moyens de décalage dans le temps des ensembles de valeurs mesurées des premier et deuxième paramètres P(t), Ta(t), pour obtenir des ensembles de valeurs rephasées des premier et deuxième paramètres P(t), Ta(t), présentant un déphasage $\varphi$,

(g) des moyens de calcul de la corrélation entre les ensembles de valeurs rephasées des premier et deuxième paramètres P(t), Ta(t),

(h) des moyens d'incrémentation du déphasage $\varphi$ et d'itération des étapes f) et g) jusqu'à l'obtention d'une meilleure corrélation entre les paramètres P(t) et Ta(t),

(i) des moyens de regonflage virtuel de l'ensemble de valeurs rephasées et optimisées du premier paramètre P(t) pour ajouter à chaque valeur du premier paramètre P(t) une quantité $\Delta P(t) = \delta \times t$ représentant la perte de pression qui aurait été perdue avec une fuite par unité de temps égale à $\delta$,

(j) des moyens de calcul de la corrélation entre l'ensemble de valeurs du premier paramètre P(t) rephasées et regonflées par une quantité $\Delta P(t)$ et l'ensemble de valeurs du deuxième paramètre Ta(t) rephasées et optimisées,

(k) des moyens d'incrémentation de la fuite $\delta$ par unité de temps et d'itération des étapes i) et j) jusqu'à l'obtention d'une meilleure corrélation entre les paramètres P(t) et Ta(t),

(l) des moyens d'identification et de quantification d'une fuite δ par unité de temps à partir du résultat de l'étape k).

Avantageusement, les moyens de mesure d'ensembles de valeurs des premier et deuxième paramètres P(t), Ta(t) comprennent chacun des moyens d'acquisition de quelques milliers à quelques dizaines de milliers de valeurs à des instants différents d'une plage de temps prédéterminée ($t_1$, $t_2$).

Le dispositif peut comprendre des moyens d'alimentation en énergie pour être utilisé in situ de façon autonome.

Le gaz sous pression peut être un gaz d'essai tel que de l'air comprimé.

D'autres caractéristiques et avantages de l'invention ressortiront de la description suivante de modes particuliers de réalisation, donnés à titre d'exemples non limitatifs, en référence aux dessins annexés, sur lesquels :

- la Figure 1 est une vue schématique d'une canalisation de transport ou de distribution de gaz partiellement enterrée à laquelle est applicable l'invention,
- la Figure 2 est une vue schématique d'un réservoir fermé de stockage de gaz sous pression, auquel est applicable l'invention,
- la Figure 3 est un schéma-bloc montrant les principaux éléments constitutifs d'un dispositif selon l'invention,
- la Figure 4 est un organigramme montrant les principales étapes d'un premier exemple de procédé selon l'invention,
- les Figures 5 à 8 sont différents diagrammes donnant des exemples de résultats de mesures et de calculs à différentes étapes du procédé selon l'invention,
- la Figure 9 est un organigramme montrant les principales étapes d'un deuxième exemple de procédé selon l'invention, et
- les Figures 10 et 11 sont des diagrammes illustrant la méthode de dichotomie pouvant être mise en oeuvre dans le procédé selon l'invention.

La Figure 1 illustre l'application de l'invention au contrôle d'étanchéité d'une canalisation enterrée 50 comportant une paroi par exemple en polyéthylène. La canalisation 50 est pour l'essentiel enterrée sur toute sa longueur, mais comprend au moins une partie en contact avec l'ambiance externe. Cette partie peut comprendre notamment un branchement 51, muni d'un robinet d'arrêt non représenté et qui permet en particulier le raccordement par une ligne 12 à une source externe 11 de gaz sous pression pouvant servir de gaz d'essai tel que de l'air comprimé. Le robinet d'arrêt est toujours en contact avec l'extérieur, même si une partie du branchement 51 peut être enterrée. L'invention peut aussi être mise en oeuvre directement avec une canalisation à l'intérieur de laquelle se trouve un gaz de service sous pression.

La partie en contact avec l'ambiance externe peut aussi être une partie de la canalisation 50 sur laquelle ont été réalisées des soudures 52, 53 et qui constituent des parties plus fragiles pouvant nécessiter des réparations plus fréquentes.

On a représenté sur la Figure 1 un défaut 54 de la canalisation 50, qui peut provoquer une fuite de gaz à l'extérieur de la canalisation. C'est ce genre de fuite que le procédé et le dispositif selon l'invention permettent de détecter tout en en évaluant l'ampleur.

La Figure 1 montre un dispositif 41 de mesure de la température ambiante Ta(t) au voisinage des parties de la canalisation 50 qui ne sont pas enterrées.

Un dispositif 31 de mesure de la pression P(t) à l'intérieur de la canalisation 50 est également utilisé et peut mesurer la pression par exemple au niveau du branchement 51.

Les dispositifs de mesure 31, 41 sont adaptés pour mesurer la pression et la température en fonction du temps en effectuant une série de mesures successives dans un intervalle de temps prédéterminé $t_1$, $t_2$.

Les dispositifs de mesure 31, 41 sont reliés à un dispositif 20 d'exploitation des mesures qui sera décrit plus en détail en référence à la Figure 3.

A l'intérieur de la canalisation 50, des portions enterrées sont soumises à une température de terre Tt qui peut être considérée comme constante au moins durant un essai d'étanchéité et d'autres portions non enterrées sont soumises à une température ambiante externe Ta(t) qui varie avec le temps.

Les portions de canalisation en contact avec la température ambiante externe contribuent à rendre la température moyenne interne de la canalisation Ti(t) sensible aux variations de la température ambiante externe.

Dans la mesure où, lors d'un essai de contrôle d'étanchéité, la canalisation 50 est obturée à ses extrémités, il n'existe pas de circulation d'air à l'intérieur de la canalisation et d'une façon générale, les portions couvertes de la canalisation restent à la température de terre Tt tandis que les portions découvertes sont à la température ambiante extérieure Ta(t).

Soit Va le volume de canalisation soumis aux phénomènes extérieurs, Ta(t) la température ambiante extérieure, Vt le volume de canalisation enterrée, Tt la température de terre (considérée constante), la température moyenne Ti(t) interne à la canalisation peut alors s'écrire :

$$Ti(t) = (Ta(t) \times Va + Tt \times Vt) / (Va + Vt), \qquad (1)$$

d'où les coefficients de la fonction affine (2) $Ti(t) = A \times Ta(t) + B$
avec $A = (Va + Vt)$ et $B = Tt \times Vt / (Va + Vt)$.

Si la durée totale $\Delta t$ d'un essai est suffisante (par exemple égale à plusieurs heures), l'expérience a montré que la loi d'évolution moyenne indiquée ci-dessus est vérifiée de façon globale pour l'ensemble d'un essai.

Ainsi la température moyenne interne de la canalisation est une fonction de la température ambiante extérieure modélisable comme une fonction affine de la température extérieure à un déphasage $\varphi$ près

$$Ti(t) = A \times Ta(t + \varphi) + B \qquad (3)$$

avec
Ta(t) température ambiante extérieure évoluant au cours du temps,
Ti(t) température interne moyenne de la canalisation évoluant au cours du temps,
A et B : des coefficients,
$\varphi$ : déphasage entre les courbes Ta(t) et Ti(t).

Ce déphasage $\varphi$ peut être dû au temps de réponse de la canalisation à l'évolution de température et/ou à la localisation du capteur de température par rapport aux portions découvertes du réseau.

De façon plus particulière, le procédé selon l'invention permet de déterminer l'évolution de la pression à l'intérieur de la canalisation 50 en fonction de la température ambiante extérieure qui est un paramètre facilement mesurable.

L'évolution de la pression P(t) dans la canalisation au cours du temps, en fonction de la température moyenne interne Ti(t), peut s'écrire, s'il n'y a pas de fuite, de la manière suivante, grâce à la loi des gaz parfaits :

$$P(t) = (nR / V) \times Ti(t) \qquad (4)$$

avec
n nombre de moles de gaz contenues dans la canalisation,
R constante des gaz parfaits,
V volume de la canalisation.

Si on fait abstraction du déphasage entre la température moyenne interne Ti(t) et la température ambiante externe Ta(t), on peut réécrire cette équation (4) en fonction de la température ambiante extérieure Ta(t), Ti étant une fonction affine de Ta comme vu ci-avant :

$$P(t) = (nR / V) \times (A \times Ta(t) + B) = (nRA / V) \times Ta(t) + nRB / V \qquad (5)$$

Ce résultat permet de confirmer que l'évolution de la pression interne de la canalisation P(t) peut être une fonction affine de la température extérieure Ta(t), comme cela a été établi expérimentalement dans le cadre de la présente invention.

Ainsi, le procédé selon l'invention adopte une démarche qui permet de s'affranchir de la nécessité de rechercher la température interne moyenne Ti(t) qui est très difficile, voire impossible à mesurer.

Les différentes étapes du procédé selon l'invention seront décrites plus en détail dans la suite de la description.

La Figure 2 montre l'application de l'invention à la recherche de fuite dans un réservoir fermé 60 muni d'un raccord 61 de remplissage de gaz, lequel réservoir 60 est en contact totalement ou partiellement avec une ambiance externe à une température variable Ta(t).

On a représenté l'existence d'une fuite 64 dans la paroi du réservoir 60 ainsi que des moyens de mesure 31 de la pression interne P(t) de gaz dans le réservoir 60, et des moyens de mesure 41 de la température ambiante externe Ta(t) qui sont analogues aux moyens de mesure illustrés sur la Figure 1. Comme dans le cas de la canalisation 50 de la Figure 1, un réservoir 11 de gaz d'essai, tel que de l'air comprimé, est relié par une conduite 12 au raccord 61 pour appliquer au réservoir fermé 60 un gaz d'essai sous pression durant le temps de la conduite d'un essai de contrôle d'étanchéité. Un contrôle d'étanchéité peut toutefois être effectué selon les mêmes principes si, au lieu d'un gaz d'essai, il a été introduit dans le réservoir un gaz de stockage destiné à l'exploitation. Comme dans le cas de la Figure 1, les moyens de mesure 31 et 41 sont reliés à un dispositif de traitement 20 qui sera décrit plus en détail en référence à la Figure 3.

La Figure 3 illustre sous forme de schéma-bloc les principaux constituants du dispositif 20 de traitement des informations P(t) et Ta(t) délivrées par les dispositifs de mesure 31 et 41.

Le dispositif 20 peut être équipé d'une source 27 d'alimentation en énergie électrique, telle qu'une batterie ou des piles, afin de pouvoir être utilisé in situ de façon autonome.

Le dispositif 20 de traitement d'information comprend essentiellement une unité centrale de traitement 21, des unités de mémoire 22, 23, une horloge 24, des logiciels 25 et un écran d'affichage 26.

Les principales étapes d'un mode particulier de réalisation du procédé selon l'invention et les principaux modules des logiciels 25 seront maintenant décrits en référence à l'organigramme de la Figure 4.

Après avoir introduit dans l'enceinte 50 ou 60 dont l'étanchéité est à contrôler, un gaz sous pression, par exemple un gaz d'essai à partir d'une source 11 de gaz d'essai, tel que de l'air comprimé, il est déterminé un intervalle de temps $\Delta t$ entre des instants $t_1$ et $t_2$ pour effectuer l'essai de contrôle.

Cet intervalle de temps $\Delta t$ peut avoir une durée finie quelconque dès lors que l'on a choisi une fréquence d'échantillonnage suffisamment élevée. Dans le cadre d'un contrôle d'étanchéité de canalisation, l'intervalle de temps $\Delta t$ peut être par exemple de l'ordre de 4h à 48h et de préférence de l'ordre de 6h à 12h.

Il est également déterminé lors de cette première étape 101 la fréquence d'échantillonnage pour les mesures qui seront acquises à partir des moyens de mesure de pression 31 et des moyens de mesure de température 41. Cette fréquence est de préférence telle que l'on effectue plusieurs mesures par minute.

Pendant des étapes 102 et 103, on procède respectivement à la mesure des valeurs de la pression P(t) à l'intérieur de l'enceinte 50, 60 en fonction du temps et à la mesure de valeurs de la température ambiante Ta(t) en fonction du temps.

Un test 104 permet de déterminer si l'intervalle de temps de l'essai $[t_1, t_2]$ est écoulé ou non.

Tant que l'intervalle de temps $[t_1, t_2]$ n'est pas écoulé, les mesures des étapes 102 et 103 continuent d'être effectuées et acquises par le système. Lorsque la durée $\Delta t = t_2 - t_1$ prévue pour l'essai est écoulée, le test 104 permet de passer à des étapes de traitement des valeurs mesurées précédemment.

Ainsi, à l'étape 105, on exprime la pression P(t) en fonction de la température ambiante externe Ta(t) pour l'ensemble des valeurs mesurées de ces paramètres P(t) et Ta(t) dans l'intervalle de temps $[t_1,t_2]$.

A l'étape 106, on initialise le déphasage $\varphi$ et la valeur de fuite par unité de temps $\delta$.

A l'étape 107, on effectue un décalage dans le temps d'un déphasage $\varphi$ des ensembles de valeurs des paramètres P(t) et Ta(t) dans l'intervalle de temps $[t_1, t_2]$.

A l'étape 108, on effectue une régression et on procède à un calcul de corrélation des ensembles de valeurs rephasées avec le déphasage $\varphi$ des paramètres P(t) et Ta(t).

A l'étape 109, on procède à un test afin de déterminer si la corrélation entre la pression P(t) et la température ambiante Ta(t) est optimale.

Si ce n'est pas le cas, il y a retour à l'étape 107 par l'intermédiaire d'une étape 110 au cours de laquelle on procède à une modification du déphasage $\varphi$. Cette modification peut être incrémentale, mais peut aussi être effectuée par toute autre méthode permettant une obtention rapide du déphasage. La modification du déphasage peut aussi s'effectuer avantageusement par dichotomie.

Si le test 109 révèle que la corrélation qui vient d'être calculée est optimale, on passe à l'étape 111 au cours de laquelle on enregistre les fichiers des valeurs rephasées des paramètres P(t) et Ta(t) avec le déphasage $\varphi$ correspondant à la corrélation optimale.

Après l'étape 111, on procède, au cours d'une étape 112, à l'ajout à chaque valeur rephasée du paramètre P (t) d'une quantité $\Delta P(t) = \delta \times t$ représentant la perte de pression qui aurait été perdue avec une fuite par unité de temps égale à $\delta$.

A l'étape 113 suivante, on effectue une régression et on procède à un calcul de corrélation entre l'ensemble de valeurs du paramètre P(t) rephasées et virtuellement regonflées par une quantité $\Delta P(t)$ et l'ensemble de valeurs du paramètre Ta(t) rephasées.

Après l'étape 113, on procède à un test à l'étape 114 pour examiner si la corrélation entre les paramètres P(t) et Ta(t) qui vient d'être calculée est optimale.

Si ce n'est pas le cas, on procède à l'étape 115 à une modification de la valeur de la fuite par unité de temps δ et on revient à l'étape 112. Cette modification peut être incrémentale, mais elle peut aussi être effectuée par toute autre méthode permettant une obtention rapide de la valeur de fuite par unité de temps. La modification de la valeur de fuite par unité de temps δ peut aussi avantageusement s'effectuer par dichotomie.

Si au contraire le test de l'étape 114 révèle que la corrélation qui vient d'être calculée est optimale, on passe à l'étape 116 au cours de laquelle on enregistre la valeur δ correspondant à la corrélation optimale.

Un test à l'étape 117 permet de vérifier si la valeur δ finalement retenue et enregistrée est nulle ou non.

Si la valeur de δ est nulle, ou si en pratique la valeur de δ est dans l'intervalle de tolérance proche de zéro imputable à la mesure des capteurs ou de tout autre composant du dispositif (c'est-à-dire si $|\delta| < \varepsilon$ où ε est une valeur numérique faible correspondant à la tolérance admise), on peut afficher à l'étape 118 une absence de fuite et donc une étanchéité correcte de l'enceinte à contrôler.

Si au contraire la valeur de δ n'est pas nulle et se situe en dehors de l'intervalle de tolérance (-ε, +ε) imputable à l'incertitude des mesures des capteurs ou de tout autre composant du dispositif de mesure, on affiche à l'étape 119 la valeur δ finalement retenue et enregistrée, laquelle valeur δ signale que l'enceinte à contrôler est défectueuse et présente un défaut d'étanchéité. La valeur δ finale permet de quantifier la fuite par unité de temps.

L'organigramme illustré sur la Figure 4 n'est nullement limitatif. D'autres organigrammes appliquant le même principe du procédé selon l'invention, comme celui illustré sur la Figure 9, permettent également d'obtenir tous les résultats et avantages du procédé selon l'invention.

A titre d'exemple, dans l'organigramme de la Figure 9, l'étape 106' d'initialisation du déphasage φ et de la valeur δ correspondant à la fuite par unité de temps, peut être située immédiatement après l'étape 101 de détermination de l'intervalle de temps $[t_1, t_2]$ et de détermination de la fréquence d'échantillonnage.

Dans ce cas, le test 104' destiné à déterminer si l'intervalle de temps $[t_1, t_2]$ est écoulé, est situé après l'étape 118 d'affichage d'absence de fuite, au lieu d'être situé entre l'étape 103 de mesure de la valeur de la température ambiante Ta(t) en fonction du temps et l'étape 105 d'expression de P(t) en fonction de Ta(t) pour l'ensemble des valeurs mesurées dans l'intervalle de temps $[t_1\ t_{2]}$.

Après le test de l'étape 104', si l'intervalle de temps $[t_1, t_2]$ n'est pas écoulé, il y a retour à l'étape 102 de mesure de la valeur de pression P(t) en fonction du temps. Si au contraire, l'intervalle de temps $[t_1, t_{2]}$ est écoulé, il y a passage à une étape 120 de fin de test et d'affichage du fait que l'enceinte est étanche.

Les diverses étapes de l'organigramme de la Figure 9 portant les mêmes numéros de référence que celles de l'organigramme de la Figure 4 assurent les mêmes fonctions et ne seront pas décrites à nouveau en détail.

L'organigramme de la Figure 9 se prête bien à des méthodes de calcul de corrélation rapides, par exemple par dichotomie, et permettent de déceler rapidement s'il existe ou non une fuite. En cas de fuite, l'utilisateur peut ensuite ajuster le temps nécessaire pour obtenir un affichage stable de la valeur δ donnant la fuite par unité de temps (étape 119). L'intervalle de temps $[t_1, t_2]$ peut être de durée réduite, par exemple de 5 à 10 mn, s'il s'agit simplement d'établir dans un premier temps s'il y a ou non une fuite. Dans ce cas, si à la fin de ce bref laps de temps il n'y a pas d'affichage d'absence de fuite à l'étape 120, le procédé peut être poursuivi pendant plusieurs heures pour caractériser avec précision à l'étape 119 l'importance de la fuite.

La méthode de calcul de corrélation par dichotomie appliquée à la recherche du déphasage φ et de la fuite δ sera décrite ci-dessous en référence aux Figures 10 et 11.

Selon cette méthode de dichotomie, on cherche à déterminer la valeur minimale d'une courbe C, qui est une parabole P décrite par des points dont les abscisses sont les déphasages DPH et les ordonnées sont les sommes des carrés SC.

Cette somme des carrés reflète l'écart entre une solution supposée et un modèle théorique. Le paramètre appliqué en guise de variation pas à pas est le déphasage DPH.

Cette méthode converge rapidement vers la solution DPH qui correspond au minimum de la fonction SC*. Le nombre d'itérations peut être par exemple d'environ 20 dans le cadre de la présente application.

Le principe de la méthode est décrit ci-dessous, la Figure 10 illustrant l'étape 1 et la Figure 11 illustrant l'étape 2.

<u>Etape 1 :</u>

M1 est le point correspondant au déphasage initial DPH1 (présumé solution, souvent nul).

M2 est le point correspondant au déphasage maxIMAL DPH2 admissible pour le balayage.

En premier lieu, on calcule M3 correspondant au déphasage DPH3 délimitant le domaine d'étude en deux :

$$DPH3 = (DPH1 + DPH2) / 2.$$

Ce domaine d'étude est noté D1.

On calcule alors la somme des carrés SC3 pour cette valeur de déphasage DPH3. Puis vient ensuite un calcul identique mais au voisinage de M3 et noté M3+. Le décalage appliqué correspond à DPH3+ = DPH3 + 1. Cette incrémentation du déphasage permet de voir localement le sens d'évolution de la fonction étudiée.

On compare alors ces deux valeurs.

Si (SOMME CARRE SC3+ < SOMME CARRE SC3) alors le minimum de la courbe est dans la partie 1. Sinon le minimum est dans la partie 2.

Etape 2 :

On réitère le principe de l'Etape 1 en limitant le domaine d'étude à D2 défini par l'intervalle [DPH3, DPH2].

Etape n :

On réitère le principe de l'Etape 1 en limitant le domaine d'étude à Dn défini par l'intervalle [DPHn+1, DPHn].

La solution DPH* est considérée comme bonne lorsque [DPHn+1 - DPHn) < E où E est une valeur d'erreur très faible. La valeur de SC = SC* est alors minimale.

Les Figures 5 à 8 illustrent différentes phases du procédé selon l'invention à partir d'un exemple particulier correspondant à un essai de contrôle d'étanchéité d'une canalisation de distribution de gaz en polyéthylène, cet essai ayant donné lieu à l'acquisition de 15 000 valeurs de mesure de la pression interne P(t) de la canalisation remplie d'air comprimé et de 15 000 valeurs de mesure de la température ambiante externe Ta(t) au voisinage des parties non enterrées de la canalisation, les valeurs mesurées étant réparties sur un intervalle de temps $\Delta t$ égal à 24 h.

La Figure 5 montre la courbe 201 correspondant aux différentes valeurs de la pression P(t) mesurées aux instants successifs de mesure de la durée de l'essai $\Delta t$, ainsi que la courbe 202 correspondant aux différentes valeurs de la température ambiante Ta(t) mesurées aux instants successifs de mesure de la durée de l'essai $\Delta t$.

Les deux courbes 201 et 202 présentent un déphasage $\varphi$ qui correspond dans cet exemple à 780 points de mesure.

Dans cet essai, on voit que la température Ta(t) a fluctué entre environ 289 K et 298 K tandis que la pression a évolué entre 2040 et 2140 mbar.

La Figure 6 illustre le résultat des étapes du procédé selon l'invention consistant à exprimer les valeurs de pression mesurées P(t) en fonction de la température ambiante extérieure Ta(t), à faire une régression et à calculer la corrélation entre les deux paramètres P(t) et Ta(t).

Il est à noter que s'il n'y avait ni déphasage $\varphi$ entre les courbes 201 et 202 de la Figure 5, ni fuite de gaz, on obtiendrait sur le diagramme de la Figure 6 donnant les valeurs de pression P(t) en fonction des valeurs de la température extérieure Ta(t) une droite parfaite. Dans l'exemple considéré, le déphasage $\varphi$ et la fuite de gaz $\delta$ viennent altérer cette linéarité, comme on peut le voir sur la courbe 203 de la Figure 6.

La Figure 7 illustre le résultat des étapes du procédé selon l'invention consistant à effectuer un décalage relatif entre les fichiers des valeurs de pression P(t) mesurées et les fichiers des valeurs de température ambiante Ta(t) mesurées jusqu'à obtenir le décalage donnant la meilleure corrélation entre les deux paramètres P(t) et Ta(t).

La Figure 7 montre ainsi le diagramme 204 donnant les valeurs de pression P(t) mesurées et "rephasées" en fonction des valeurs de température ambiante Ta(t) mesurées. S'il n'y avait aucune fuite, le diagramme de la Figure 7 devrait correspondre à une droite parfaite, dès lors que le déphasage $\varphi$ de la Figure 5 a été compensé par le décalage relatif entre les fichiers de valeurs mesurées de la pression P(t) et de la température ambiante Ta(t). Cela n'est pas le cas, ce qui signifie qu'une fuite $\delta$ existe.

Les étapes suivantes du procédé consistant en un "regonflage" virtuel de pression permettent de déterminer la valeur de la fuite $\delta$.

Ainsi, la recherche de l'importance de la fuite s'effectue en ajoutant à chaque valeur de pression mesurée et rephasée P(t) la valeur de la perte de pression $\Delta P(t) = \delta \times t$ qui aurait été perdue avec une fuite par unité de temps égale à $\delta$. L'enceinte à contrôler est ainsi virtuellement regonflée jusqu'à l'obtention de la meilleure corrélation entre les valeurs de pression P(t) et de température ambiante Ta(t).

La Figure 8 illustre le diagramme donnant les valeurs de pression P(t) mesurées, rephasées et "regonflées" en fonction des valeurs de température ambiante Ta(t) mesurées.

On observe que le diagramme 205 de la Figure 8 représente bien une droite qui exprime la meilleure corrélation entre les paramètres P(t) et Ta(t). La valeur $\delta$ de fuite par unité de temps correspondant à la meilleure corrélation entre les paramètres P(t) et Ta(t) quantifie l'importance de la fuite détectée.

Le déphasage φ et la fuite δ sont ainsi trouvés quand les nuages de points autour de la droite symbolisant la corrélation dans un diagramme P(t) = f(Ta(t)) sont les plus resserrés.

Les calculs de corrélation entre les paramètres P(t) et Ta(t) peuvent s'effectuer de diverses manières.

A titre d'exemple, les calculs de corrélation peuvent être effectués en utilisant la méthode des moindres carrés, mais on pourrait aussi simplement utiliser le calcul du coefficient de corrélation $R^2$ par exemple.

Dans l'exemple de la recherche du déphasage φ par la méthode des moindres carrés, on peut procéder de la façon suivante :

Pour chaque déphasage φ, les coefficients a et b de la régression linéaire sont calculés.

Pour chaque température Ta(t), on calcule la pression Pmodel (t) "modélisée" à l'aide des coefficients a et b :

$$\text{Pmodel}(t) = a \times T(t) + b$$

Cette valeur Pmodel (t) est retranchée à la pression expérimentale correspondante Pexp(t) pour obtenir un écart "Ecart" :

$$\text{Ecart} = \text{Pexp}(t) - \text{Pmodel}(t)$$

L'écart obtenu Ecart est élevé au carré.

Le déphasage φ est trouvé lorsque la somme de l'ensemble des écarts élevés au carré est minimale.

De façon similaire, dans l'exemple de la recherche de la fuite δ par la méthode des moindres carrés, on calcule pour chaque valeur δ de gonflage les coefficients a et b de la régression linéaire.

Pour chaque température, on calcule la pression Pmodel (t) "modélisée" à l'aide des coefficients a et b :

$$\text{Pmodel}(t) = a \times T(t) + b.$$

Cette valeur Pmodel (t) est retranchée à la pression expérimentale correspondante Pexp (t) "regonflée" avec l'adjonction de la différence de pression ΔP(t) = δ × t pour obtenir un écart "Ecart" :

$$\text{Ecart} = (\text{Pexp}(t) + \delta \times t) - \text{Pmodel}(t).$$

L'écart obtenu est élevé au carré.

Le gonflage ΔP(t) correspondant à la fuite réelle δ est trouvé quand la somme de l'ensemble des écarts élevés au carré est minimale.

Le procédé selon l'invention peut être mis en oeuvre avec des composants relativement bon marché, car il n'est pas nécessaire de procéder à des calculs extrêmement complexes.

Dès lors que le nombre d'acquisitions de mesures (quelques milliers) et que la durée de l'essai sont suffisants (de préférence de l'ordre de 6h à 12h pour le contrôle d'étanchéité d'une canalisation de distribution ou de transport de gaz), il n'est pas nécessaire d'utiliser des capteurs de mesure de température et de pression extrêmement précis.

Le dispositif de contrôle peut donc être réalisé de façon économique.

De plus, dans le cas de contrôle de canalisations de distribution de gaz, dont une majeure partie, par exemple 95%, est enterrée, il n'est pas nécessaire de mesurer ou déterminer de façon indirecte la température interne à la canalisation, qui est difficile à évaluer et il est seulement nécessaire de procéder à une mesure de la température ambiante extérieure au voisinage des parties non enterrées de la canalisation, ce qui est très facile.

Par ailleurs, dans le cas de contrôles de canalisations de distribution de gaz en polyéthylène, le procédé selon l'invention, du fait de sa précision, peut autoriser de conduire en une seule campagne de mesures un essai de résistance mécanique et un essai de contrôle d'étanchéité, ce qui diminue le coût total pour des exploitants de réseaux de distribution de gaz.

Comme on le sait, les canalisations de distribution de gaz en polyéthylène subissent généralement deux tests de pression.

Un premier test, dit de résistance mécanique, est réalisé avec une pression correspondant à 1,5 fois la pression de service pendant un temps très court.

Un deuxième test dit d'étanchéité est réalisé à la même pression ou, la plupart du temps, à une pression plus basse, mais sur une durée beaucoup plus longue.

Lors du premier type d'essai, l'ensemble des points d'assemblage et des piquages sont contrôlés par savonnage.

L'essai d'étanchéité traditionnel est de préférence réalisé séparément à une pression plus faible que celle de l'essai de résistance mécanique, notamment parce que l'influence de la température augmente avec l'augmentation de la pression : à une pression de 1 bar et une température de 17°C, une variation d'un degré provoque une évolution de la pression de 6,99 mbar alors qu'elle est de 24,35 mbar à 6 bar, soit près de 3 fois la variation à 1 bar.

Dans la mesure où le procédé selon l'invention permet de maîtriser pleinement l'influence de la température, il est possible de coupler les deux essais et d'effectuer un essai d'étanchéité à une pression compatible avec l'essai de résistance mécanique, ce qui réduit le temps global effectué pour les essais tout en conservant une précision compatible avec les exigences de sécurité.

## Revendications

**1.** Procédé de contrôle d'étanchéité d'une enceinte contenant un gaz sous pression et comprenant une paroi dont une partie au moins est en contact avec une ambiance externe dont la température est variable,
comprenant les étapes suivantes :

(a) introduire dans l'enceinte un gaz sous pression,
(b) mesurer entre des instants prédéterminés $t_1$ et $t_2$ un ensemble de valeurs d'un premier paramètre constitué par la pression P(t) du gaz à l'intérieur de l'enceinte, en fonction du temps,
(c) mesurer entre les mêmes instants prédéterminés $t_1$ et $t_2$ un ensemble de valeurs d'un deuxième paramètre constitué par la température ambiante Ta(t) de l'ambiance externe avec laquelle la paroi de l'enceinte est en contact, en fonction du temps,
(d) exprimer le premier paramètre P(t) en fonction du deuxième paramètre Ta(t) pour les ensembles de valeurs mesurées des premier et deuxième paramètres P(t), Ta(t) dans l'intervalle de temps $[t_1, t_2]$ défini par lesdits instants prédéterminés $t_1$, $t_2$, effectuer une régression et calculer la corrélation entre les premier et deuxième paramètres P(t), Ta(t),
(e) effectuer un décalage dans le temps d'au moins l'un des ensembles de valeurs des premier et deuxième paramètres P(t), Ta(t) dans l'intervalle de temps $[t_1, t_2]$ défini par lesdits instants prédéterminés $t_1$, $t_2$ jusqu'à obtenir entre des ensembles de valeurs rephasées des premier et deuxième paramètres P(t) et Ta(t), un déphasage $\varphi$ donnant la meilleure corrélation entre ces paramètres P(t) et Ta(t),
(f) à partir des ensembles de valeurs rephasées des premier et deuxième paramètres P(t) et Ta(t), ajouter à chaque valeur rephasée du premier paramètre P(t) une quantité $\Delta P(t) = \delta \times t$ représentant la perte de pression qui aurait été perdue avec une fuite par unité de temps égale à $\delta$, et déterminer la fuite par unité de temps $\delta$ qui permet d'obtenir la meilleure corrélation entre l'ensemble de valeurs du premier paramètre P(t) rephasées et regonflées par une quantité $\Delta P(t)$ et l'ensemble de valeurs du deuxième paramètre Ta(t) rephasées, et
(g) identifier une fuite si la meilleure corrélation entre l'ensemble de valeurs du premier paramètre P(t) rephasées et regonflées par une quantité $\Delta P(t)$ et l'ensemble de valeurs du deuxième paramètre Ta(t) rephasées est non nulle.

**2.** Procédé selon la revendication 1, **caractérisé en ce que** lesdits ensembles de valeurs du premier paramètre P(t) et du deuxième paramètre Ta(t) acquises lors des mesures comprennent chacun entre quelques milliers et quelques dizaines de milliers de valeurs acquises.

**3.** Procédé selon la revendication 1 ou la revendication 2,
**caractérisé en ce que** l'intervalle de temps $[t_1,t_2]$ défini par lesdits instants prédéterminés $t_1,t_2$ a une durée comprise entre 4h et 48h.

**4.** Procédé selon la revendication 1 ou la revendication 2,
**caractérisé en ce que** l'intervalle de temps $[t_1,t_2]$ défini par lesdits instants prédéterminés $t_1,t_2$ a une durée comprise entre 6h et 12h.

**5.** Procédé selon l'une quelconque des revendications 1 à 4,

**caractérisé en ce que** lors de l'étape e) de décalage dans le temps d'au moins l'un des ensembles de valeurs des premier et deuxième paramètres P(t) et Ta(t), la méthode de corrélation employée est la méthode des moindres carrés.

6. Procédé selon l'une quelconque des revendications 1 à 5,
**caractérisé en ce que** lors de l'étape f) de regonflage des valeurs du premier paramètre P(t) rephasées, la méthode de corrélation employée est la méthode des moindres carrés.

7. Procédé selon l'une quelconque des revendications 1 à 4,
**caractérisé en ce que** lors de l'étape e) de décalage dans le temps d'au moins l'un des ensembles de valeurs des premier et deuxième paramètres P(t) et Ta(t), la recherche du déphasage φ pour lequel la corrélation est optimale est effectuée par dichotomie.

8. Procédé selon l'une quelconque des revendications 1 à 4 et 7,
**caractérisé en ce que** lors de l'étape f) de regonflage des valeurs du premier paramètre P(t) rephasées, la recherche de la meilleure corrélation entre l'ensemble de valeurs du premier paramètre P(t) rephasées et regonflées par une quantité ΔP(t) et l'ensemble de valeurs du deuxième paramètre Ta(t) rephasées est effectuée par dichotomie.

9. Procédé selon l'une quelconque des revendications 1 à 8,
**caractérisé en ce qu'**il est appliqué à un réservoir fermé.

10. Procédé selon l'une quelconque des revendications 1 à 8,
**caractérisé en ce qu'**il est appliqué à une canalisation enterrée de transport ou de distribution de gaz sous pression.

11. Procédé selon l'une quelconque des revendications 1 à 8,
**caractérisé en ce que** le gaz sous pression est un gaz d'essai tel que de l'air comprimé.

12. Dispositif de contrôle d'étanchéité d'une enceinte (50 ; 60) contenant un gaz sous pression et comprenant une paroi dont une partie au moins est en contact avec une ambiance externe dont la température est variable, comprenant:

(a) des moyens (31) de mesure d'un ensemble de valeurs d'un premier paramètre constitué par la pression P (t) du gaz à l'intérieur de l'enceinte (50 ; 60), en fonction du temps,
(b) des moyens (41) de mesure d'un ensemble de valeurs d'un deuxième paramètre constitué par la température ambiante Ta(t) de l'ambiance externe avec laquelle la paroi de l'enceinte (50 ; 60) est en contact, en fonction du temps,
(c) une unité centrale de traitement (21),
(d) des unités de mémoire (22, 23),
(e) des moyens de calcul de la corrélation entre les premier et deuxième paramètres P(t), Ta(t), à partir d'ensembles de valeurs mesurées des premier et deuxième paramètres P(t), Ta(t) à des instants déterminés,
(f) des moyens de décalage dans le temps des ensembles de valeurs mesurées des premier et deuxième paramètres P(t), Ta(t), pour obtenir des ensembles de valeurs rephasées des premier et deuxième paramètres P(t), Ta(t), présentant un déphasage φ,
(g) des moyens de calcul de la corrélation entre les ensembles de valeurs rephasées des premier et deuxième paramètres P(t), Ta(t),
(h) des moyens d'incrémentation du déphasage φ et d'itération des étapes f) et g) jusqu'à l'obtention d'une meilleure corrélation entre les paramètres P(t) et Ta(t),
(i) des moyens de regonflage virtuel de l'ensemble de valeurs rephasées et optimisées du premier paramètre P(t) pour ajouter à chaque valeur du premier paramètre P(t) une quantité ΔP(t) = δ x t représentant la perte de pression qui aurait été perdue avec une fuite par unité de temps égale à δ,
(j) des moyens de calcul de la corrélation entre l'ensemble de valeurs du premier paramètre P(t) rephasées et regonflées par une quantité ΔP(t) et l'ensemble de valeurs du deuxième paramètre Ta(t) rephasées et optimisées,
(k) des moyens d'incrémentation de la fuite δ par unité de temps et d'itération des étapes i) et j) jusqu'à l'obtention d'une meilleure corrélation entre les paramètres P(t) et Ta(t), et
(l) des moyens d'identification et de quantification d'une fuite δ par unité de temps à partir du résultat de l'étape k).

13. Dispositif selon la revendication 12, **caractérisé en ce que** les moyens (31, 41) de mesure d'ensembles de valeurs des premier et deuxième paramètres P(t), Ta(t) comprennent chacun des moyens d'acquisition de quelques milliers à quelques dizaines de milliers de valeurs à des instants différents d'une plage de temps prédéterminée ($t_1$, $t_2$).

**14.** Dispositif selon la revendication 12 ou la revendication 13,
**caractérisé en ce qu'**il comprend des moyens (27) d'alimentation en énergie pour être utilisé in situ de façon autonome.

**15.** Dispositif selon l'une quelconque des revendications 12 à 14,
**caractérisé en ce qu'**il est appliqué au contrôle d'étanchéité d'un réservoir fermé (60).

**16.** Dispositif selon l'une quelconque des revendications 12 à 14,
**caractérisé en ce qu'**il est appliqué au contrôle d'étanchéité d'une canalisation enterrée (50) de transport de gaz sous pression.

**17.** Dispositif selon la revendication 16, **caractérisé en ce qu'**il est appliqué au contrôle d'étanchéité d'une canalisation enterrée (50) en polyéthylène assurant le transport du gaz sous pression.

**18.** Dispositif selon l'une quelconque des revendications 12 à 17,
**caractérisé en ce que** le gaz sous pression est fourni à partir d'une source de gaz d'essai sous pression tel que de l'air comprimé.

## Claims

**1.** A method of monitoring the sealing of an enclosure containing a gas under pressure and having a wall with at least a portion thereof in contact with external surroundings of temperature that is variable, the method comprising the following steps:

a) introducing a gas under pressure into the enclosure;
b) measuring as a function of time and between predetermined instants $t_1$ and $t_2$ a set of values of a first parameter constituted by the pressure P(t) of the gas inside the enclosure;
c) measuring as a function of time and between the same predetermined instants $t_1$ and $t_2$, a set of values of a second parameter constituted by the ambient temperature Ta(t) of the external surroundings with which the wall of the enclosure is in contact;
d) expressing the first parameter P(t) as a function of the second parameter Ta(t) for the sets of measured values of the first and second parameters P(t), Ta(t) in the time interval [$t_1$, $t_2$] defined by said predetermined instants $t_1$, $t_2$, performing a regression, and calculating the correlation between the first and second parameters P(t), Ta(t);
e) time shifting at least one of the sets of values of the first and second parameters P(t), Ta(t) within the time interval [$t_1$, $t_2$] defined by said predetermined instants $t_1$, $t_2$ until a phase shift φ is obtained between the sets of time-shifted values of the first parameters P(t) and Ta(t) is obtained that gives the best correlation between said parameters P(t) and Ta(t);
f) from the sets of time-shifted values of the first and second parameters P(t) and Ta(t), adding to each time-shifted value of the first parameter P(t) a quantity $\Delta P(t) = \delta \times t$ representing the pressure loss that would have been lost with a leak per unit of time equal to δ, and determining the leak per unit of time δ that serves to obtain the best correlation between the set of time-shifted values of the first parameter P(t) as increased by a quantity ΔP(t) and the set of time-shifted values of the second parameter Ta(t); and
g) identifying a leak if the best correlation between the set of time-shifted values of the first parameter P(t) as increased by a quantity ΔP(t) and the set of time-shifted values of the second parameter Ta(t) is not zero.

**2.** A method according to claim 1, **characterized in that** the each of said sets of values of the first parameter P(t) and of the second parameter Ta(t) acquired during the measurements comprises a few thousands to a few tens of thousands of acquired values.

**3.** A method according to claim 1 or claim 2, **characterized in that** the time interval [$t_1$, $t_2$] defined by said predetermined instants $t_1$, $t_2$ has a duration lying in the range 4 h to 48 h.

**4.** A method according to claim 1 or claim 2, **characterized in that** the time interval [$t_1$, $t_2$] defined by said predetermined instants $t_1$, $t_2$ has a duration lying in the range 6h to 12 h.

**5.** A method according to any one of claims 1 to 4, **characterized in that** during step e) of time shifting at least one of the sets of values of the first and second parameters P(t) and Ta(t), the correlation method used is the least squares method.

**6.** A method according to any one of claims 1 to 5, **characterized in that** during step f) of increasing the time-shifted values of the first parameter P(t), the correlation method used is the least squares method.

**7.** A method according to any one of claims 1 to 4, **characterized in that** during step e) of time shifting at least one of the sets of values of the first and second parameters P(t) and Ta(t), the search for the phase shift $\varphi$ for which the correlation is optimum is performed by dichotomy.

**8.** A method according to any one of claims 1 to 4 and 7, **characterized in that** during step f) of increasing the time-shifted values of the first parameter P(t), the search for the best correlation between the set of time-shifted values of the first parameter P(t) as increased by a quantity $\Delta P(t)$ and the set of time-shifted values of the second parameter Ta(t) is performed by dichotomy.

**9.** A method according to any one of claims 1 to 8, **characterized in that** it is applied to a closed tank.

**10.** A method according to any one of claims 1 to 8, **characterized in that** it is applied to a buried pipe for transporting or distributing gas under pressure.

**11.** A method according to any one of claims 1 to 8, **characterized in that** the gas under pressure is a test gas such as compressed air.

**12.** Apparatus for monitoring the sealing of an enclosure (50; 60) containing a gas under pressure and having a wall including at least a portion that is in contact with external surroundings of temperature that is variable, the apparatus comprising:

a) measurement means (31) for measuring as a function of time a set of values of a first parameter constituted by the pressure P(t) of the gas inside the enclosure (50; 60);
b) measurement means (41) for measuring as a function of time a set of values of a second parameter constituted by the ambient temperature Ta(t) of the external surroundings with which the wall of the enclosure (50; 60) is in contact;
c) a central processor unit (21);
d) memory units (22, 23);
e) correlation calculation means for calculating the correlation between the first and second parameters P(t), Ta(t) from sets of values of the first and second parameters P(t), Ta(t) as measured at determined instants;
f) time-shifter means for time shifting sets of measured values of the first and second parameters P(t), Ta(t) in order to obtain sets of time-shifted values of the first and second parameters P(t), Ta(t), presenting a phase shift $\varphi$;
g) correlation calculation means for calculating the correlation between the sets of time-shifted values of the first and second parameters P(t), Ta(t);
h) means for incrementing the phase shift $\varphi$ and for iterating steps f) and g) until a best correlation is obtained between the parameters P(t) and Ta(t);
i) means for virtually increasing the set of time-shifted and optimized values of the first parameter P(t) so as to add a quantity $\Delta P(t) = \delta \times t$ to each value of the first parameter P(t), the quantity $\Delta P(t)$ representing the pressure loss that would have been lost with a leak per unit time equal to $\delta$;
j) correlation calculation means for calculating the correlation between the set of time-shifted values of the first parameter P(t) as increased by a quantity $\Delta P(t)$ and the set of time-shifted and optimized values of the second parameter Ta(t);
k) means for incrementing the leak $\delta$ per unit time and for iterating steps i) and j) until a best correlation is obtained between the parameters P(t) and Ta(t); and

1) means for identifying and quantifying a leak $\delta$ per unit time on the basis of the results of step k).

**13.** Apparatus according to claim 12, **characterized in that** the measurement means (31, 41) for measuring sets of values of the first and second parameters P(t), Ta(t) each comprise means for acquiring a few thousands to a few tens of thousands of values at different instants in a predetermined time range ($t_1$, $t_2$).

14. Apparatus according to claim 12 or claim 13, **characterized in that** it includes power supply means (27) suitable for on-site use in independent manner.

15. Apparatus according to any one of claims 12 to 14, **characterized in that** it is applied to monitoring the sealing of a closed tank (60).

16. Apparatus according to any one of claims 12 to 14, **characterized in that** it is applied to monitoring the sealing of a buried pipe (50) for transporting gas under pressure.

17. Apparatus according to claim 16, **characterized in that** it is applied to monitoring the sealing of a buried pipe (50) made of polyethylene for transporting gas under pressure.

18. Apparatus according to any one of claims 12 to 17, **characterized in that** the gas under pressure is supplied by a source of test gas under pressure, such as compressed air.

**Patentansprüche**

1. Verfahren zur Kontrolle der Dichtigkeit eines Raumes, der ein Druckgas enthält und eine Wand aufweist, von welcher wenigstens ein Teil mit einer Außenumgebung in Kontakt ist, deren Temperatur veränderlich ist, welches Verfahren die folgenden Schritte umfaßt:

(a) ein Druckgas in den Raum einleiten,
(b) zwischen vorbestimmten Zeitpunkten $t_1$ und $t_2$ eine Menge von Werten eines ersten Parameters, welcher von dem Druck P(t) des Gases innerhalb des Raumes gebildet ist, in Abhängigkeit von der Zeit messen,
(c) zwischen den gleichen vorbestimmten Zeitpunkten $t_1$ und $t_2$ eine Menge von Werten eines zweiten Parameters, welcher von der Umgebungstemperatur Ta(t) der Außenumgebung, mit der die Wand des Raumes in Kontakt ist, gebildet ist, in Abhängigkeit von der Zeit messen,
(d) den ersten Parameter P(t) in Abhängigkeit von dem zweiten Parameter Ta(t) für die Mengen von Meßwerten der ersten und zweiten Parameter P(t), Ta(t) in dem durch die vorbestimmten Zeitpunkte $t_1$, $t_2$ definierten Zeitraum $[t_1, t_2]$ ausdrücken, eine Regression durchführen und die Korrelation zwischen den ersten und zweiten Parametern P(t), Ta(t) berechnen,
(e) eine Zeitverschiebung von wenigstens einer der Mengen von Werten der ersten und zweiten Parameter P (t), Ta(t) in dem durch die vorbestimmten Zeitpunkte $t_1$, $t_2$ definierten Zeitraum $[t_1, t_2]$ durchführen, bis zwischen Mengen von phasenausgeglichenen Werten der ersten und zweiten Parameter P(t) und Ta(t) eine Phasenverschiebung $\varphi$ erhalten wird, die die beste Korrelation zwischen diesen Parametern P(t) und Ta(t) ergibt,
(f) ausgehend von den Mengen von phasenausgeglichenen Werten der ersten und zweiten Parameter P(t) und Ta(t) jedem phasenausgeglichenen Wert des ersten Parameters P(t) eine Menge $\Delta P(t) = \delta \times t$ hinzufügen, die den Verlust an Druck darstellt, der bei einem Verlust pro Zeiteinheit gleich $\delta$ verloren gewesen wäre, und den Verlust pro Zeiteinheit $\delta$ bestimmen, der ermöglicht, die beste Korrelation zwischen der Menge von phasenausgeglichenen und durch eine Menge $\Delta P(t)$ aufgefüllten Werten des ersten Parameters P(t) und der Menge von phasenausgeglichenen Werten des zweiten Parameters Ta(t) zu erhalten, und
(g) ein Leck feststellen, wenn die beste Korrelation zwischen der Menge von phasenausgeglichenen und durch eine Menge $\Delta P(t)$ aufgefüllten Werten des ersten Parameters P(t) und der Menge von phasenausgeglichenen Werten des zweiten Parameters Ta(t) ungleich null ist.

2. Verfahren nach Anspruch 1, **dadurch gekennzeichnet, daß** die Mengen von Werten des ersten Parameters P(t) und des zweiten Parameters Ta(t), die während der Messungen erfaßt werden, jeweils zwischen einigen tausend und einigen zehntausend erfaßten Werten umfassen.

3. Verfahren nach Anspruch 1 oder Anspruch 2, **dadurch gekennzeichnet, daß** der durch die vorbestimmten Zeitpunkte $t_1$, $t_2$ definierte Zeitraum $[t_1, t_2]$ eine Dauer zwischen 4 Stunden und 48 Stunden hat.

4. Verfahren nach Anspruch 1 oder Anspruch 2, **dadurch gekennzeichnet, daß** der durch die vorbestimmten Zeitpunkte $t_1$, $t_2$ definierte Zeitraum $[t_1, t_2]$ eine Dauer zwischen 6 Stunden und 12 Stunden hat.

5. Verfahren nach einem der Ansprüche 1 bis 4, **dadurch gekennzeichnet, daß** bei Schritt e) der Zeitverschiebung von wenigstens einer der Mengen von Werten der ersten und zweiten Parameter P(t) und Ta(t) die angewandte Korrelationsmethode die Methode der kleinsten Fehlerquadrate ist.

6. Verfahren nach einem der Ansprüche 1 bis 5, **dadurch gekennzeichnet, daß** bei Schritt f) des Auffüllens der phasenausgeglichenen Werte des ersten Parameters P(t) die angewandte Korrelationsmethode die Methode der kleinsten Fehlerquadrate ist.

7. Verfahren nach einem der Ansprüche 1 bis 4, **dadurch gekennzeichnet, daß** bei Schritt e) der Zeitverschiebung von wenigstens einer der Mengen von Werten der ersten und zweiten Parameter P(t) und Ta(t) die Ermittlung der Phasenverschiebung φ, bei der die Korrelation optimal ist, mittels Dichotomie durchgeführt wird.

8. Verfahren nach einem der Ansprüche 1 bis 4 und 7, **dadurch gekennzeichnet, daß** bei Schritt f) des Auffüllens der phasenausgeglichenen Werte des ersten Parameters P(t) die Ermittlung der besten Korrelation zwischen der Menge von phasenausgeglichenen und durch eine Menge ΔP(t) aufgefüllten Werten des ersten Parameters P(t) und der Menge von phasenausgeglichenen Werten des zweiten Parameters Ta(t) mittels Dichotomie durchgeführt wird.

9. Verfahren nach einem der Ansprüche 1 bis 8, **dadurch gekennzeichnet, daß** es auf einen geschlossenen Behälter angewandt wird.

10. Verfahren nach einem der Ansprüche 1 bis 8, **dadurch gekennzeichnet, daß** es auf eine erdverlegte Rohrleitung für den Transport oder die Verteilung von Druckgas angewandt wird.

11. Verfahren nach einem der Ansprüche 1 bis 8, **dadurch gekennzeichnet, daß** das Druckgas ein Prüfgas, wie Druckluft ist.

12. Vorrichtung zur Kontrolle der Dichtigkeit eines Raumes (50; 60), der ein Druckgas enthält und eine Wand aufweist, von welcher wenigstens ein Teil mit einer Außenumgebung in Kontakt ist, deren Temperatur veränderlich ist, umfassend:

(a) Mittel (31) zum Messen, in Abhängigkeit von der Zeit, einer Menge von Werten eines ersten Parameters, der von dem Druck P(t) des Gases innerhalb des Raumes (50; 60) gebildet ist,
(b) Mittel (41) zum Messen, in Abhängigkeit von der Zeit, einer Menge von Werten eines zweiten Parameters, der von der Umgebungstemperatur Ta(t) der Außenumgebung, mit der die Wand des Raumes (50; 60) in Kontakt ist, gebildet ist,
(c) eine zentrale Verarbeitungseinheit (21),
(d) Speichereinheiten (22, 23),
(e) Mittel zum Berechnen der Korrelation zwischen den ersten und zweiten Parametern P(t), Ta(t) anhand von Mengen von Meßwerten der ersten und zweiten Parameter P(t), Ta(t) zu bestimmten Zeitpunkten,
(f) Mittel zur Zeitverschiebung der Mengen von Meßwerten der ersten und zweiten Parameter P(t), Ta(t), um Mengen von phasenausgeglichenen Werten der ersten und zweiten Parameter P(t), Ta(t) zu erhalten, die eine Phasenverschiebung φ aufweisen.
(g) Mittel zum Berechnen der Korrelation zwischen den Mengen von phasenausgeglichenen Werten der ersten und zweiten Parameter P(t), Ta(t),
(h) Mittel zu Inkrementieren der Phasenverschiebung φ und zur Iteration der Schritte f) und g) bis zum Erhalt einer besseren Korrelation zwischen den Parametern P(t) und Ta(t),
(i) Mittel zum virtuellen Auffüllen der Menge von phasenausgeglichenen und optimierten Werten des ersten Parameters P(t), um jedem Wert des ersten Parameters P(t) eine Menge $\Delta P(t) = \delta \times t$ hinzuzufügen, die den Verlust an Druck darstellt, der bei einem Verlust pro Zeiteinheit gleich δ verloren gewesen wäre,
(j) Mittel zum Berechnen der Korrelation zwischen der Menge von phasenausgeglichenen und durch eine Menge ΔP(t) aufgefüllten Werten des ersten Parameters P(t) und der Menge von phasenausgeglichenen und optimierten Werten des zweiten Parameters Ta(t),
(k) Mittel zum Inkrementieren des Verlustes δ pro Zeiteinheit und zur Iteration der Schritte i) und j) bis zum Erhalt einer besseren Korrelation zwischen den Parametern P(t) und Ta(t), und
(l) Mittel zum Feststellen und quantitativen Bestimmen eines Verlustes δ pro Zeiteinheit anhand des Ergebnisses des Schrittes k).

13. Vorrichtung nach Anspruch 12, **dadurch gekennzeichnet, daß** die Mittel (31, 41) zum Messen von Mengen von Werten der ersten und zweiten Parameter P(t), Ta(t) jeweils Mittel zum Erfassen von einigen tausend bis einigen zehntausend Werten zu unterschiedlichen Zeitpunkten eines vorbestimmten Zeitbereichs ($t_1$, $t_2$) umfassen.

**14.** Vorrichtung nach Anspruch 12 oder Anspruch 13, **dadurch gekennzeichnet, daß** sie Energieversorgungsmittel (27) umfaßt, um unabhängig an Ort und Stelle eingesetzt zu werden.

**15.** Vorrichtung nach einem der Ansprüche 12 bis 14, **dadurch gekennzeichnet, daß** sie bei der Kontrolle der Dichtigkeit eines geschlossenen Behälters (60) eingesetzt wird.

**16.** Vorrichtung nach einem der Ansprüche 12 bis 14, **dadurch gekennzeichnet, daß** sie bei der Kontrolle der Dichtigkeit einer erdverlegten Rohrleitung (50) für den Transport von Druckgas verwendet wird.

**17.** Vorrichtung nach Anspruch 16, **dadurch gekennzeichnet, daß** sie bei der Kontrolle der Dichtigkeit einer erdverlegten Rohrleitung (50) aus Polyethylen, welche den Transport des Druckgases sicherstellt, eingesetzt wird.

**18.** Vorrichtung nach einem der Ansprüche 12 bis 17, **dadurch gekennzeichnet, daß** das Druckgas aus einer Quelle für Druckprüfgas, wie Druckluft geliefert wird.

FIG.1

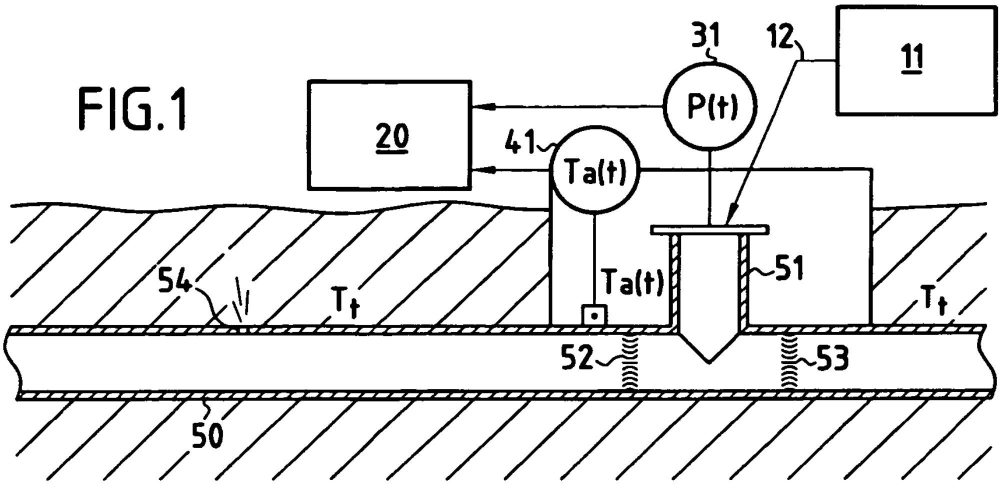


FIG.2

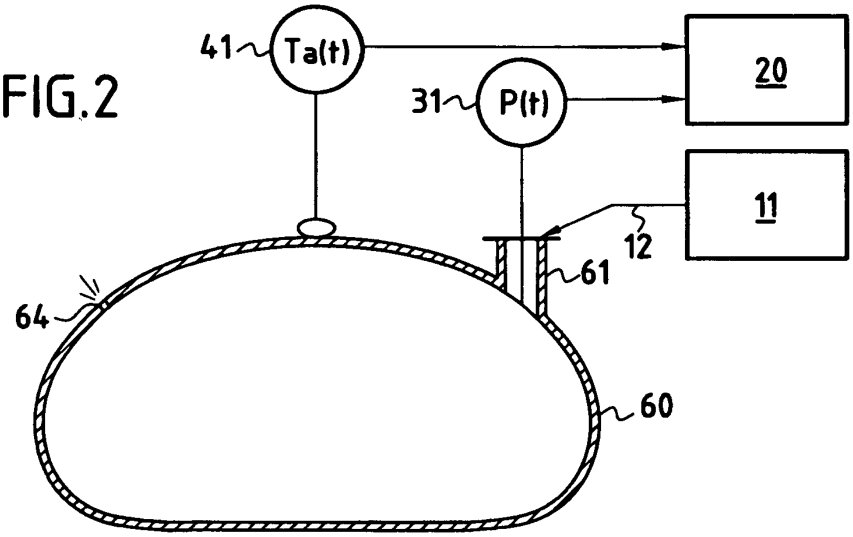


FIG.3

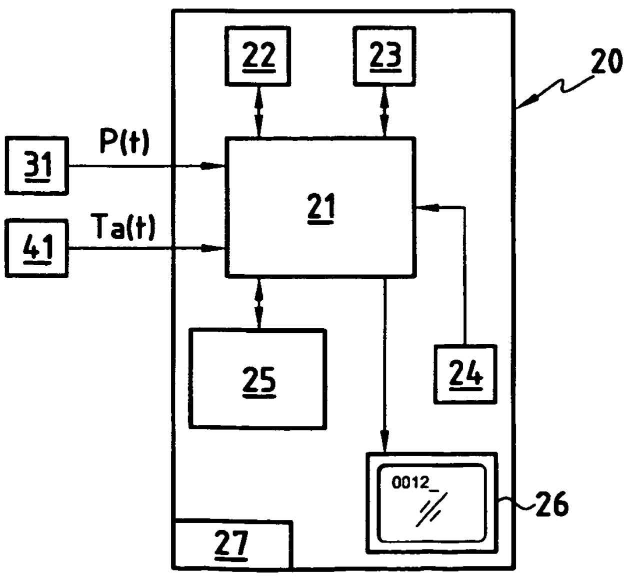

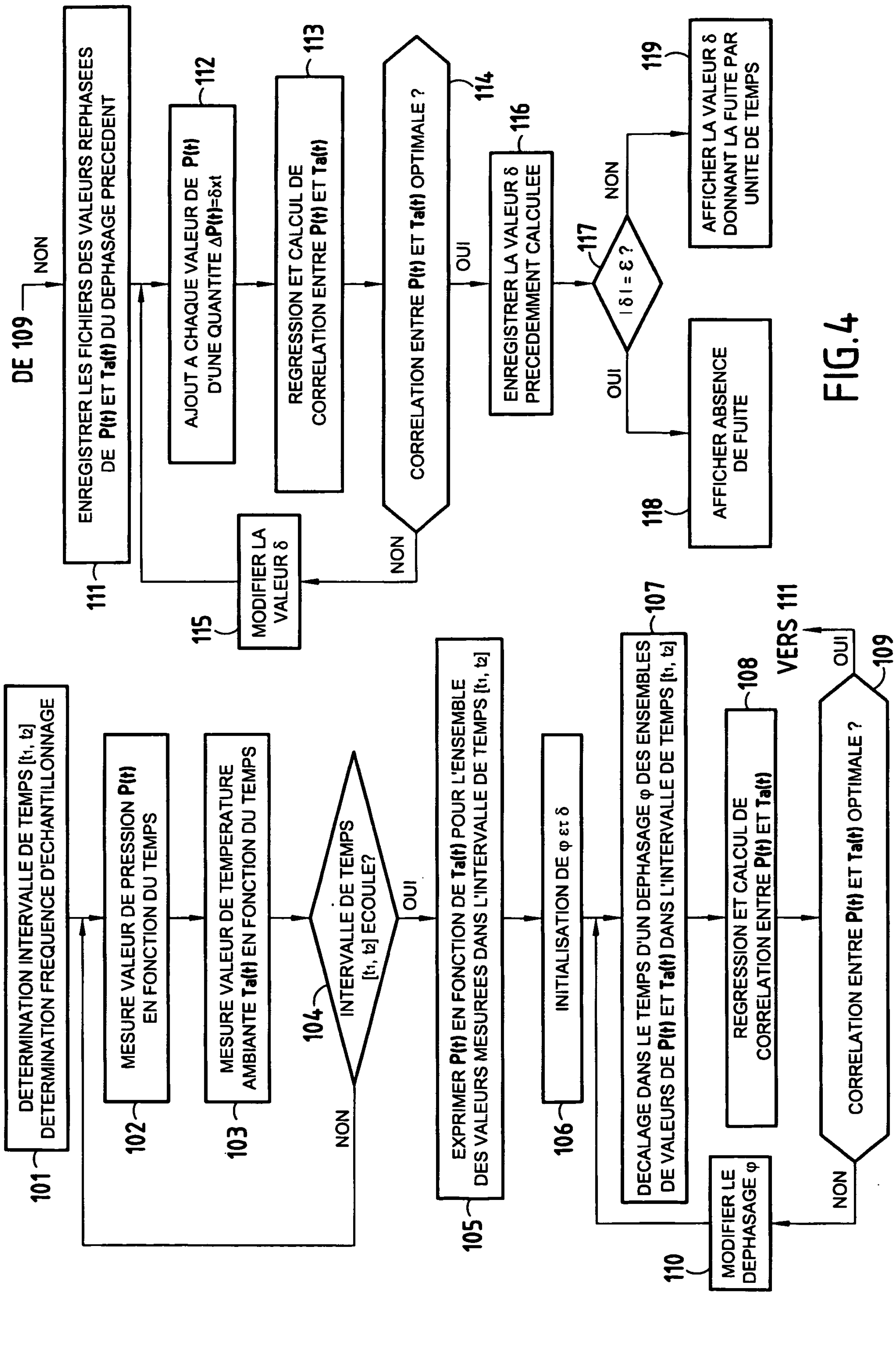

101
DETERMINATION INTERVALLE DE TEMPS [t1, t2]
DETERMINATION FREQUENCE D'ECHANTILLONNAGE
102
MESURE VALEUR DE PRESSION P(t) EN FONCTION DU TEMPS
103
MESURE VALEUR DE TEMPERATURE AMBIANTE Ta(t) EN FONCTION DU TEMPS
104
INTERVALLE DE TEMPS [t1, t2] ECOULE?
NON
OUI
105
EXPRIMER P(t) EN FONCTION DE Ta(t) POUR L'ENSEMBLE DES VALEURS MESUREES DANS L'INTERVALLE DE TEMPS [t1, t2]
106
INITIALISATION DE φ ετ δ
107
DECALAGE DANS LE TEMPS D'UN DEPHASAGE φ DES ENSEMBLES DE VALEURS DE P(t) ET Ta(t) DANS L'INTERVALLE DE TEMPS [t1, t2]
108
REGRESSION ET CALCUL DE CORRELATION ENTRE P(t) ET Ta(t)
109
CORRELATION ENTRE P(t) ET Ta(t) OPTIMALE ?
OUI
VERS 111
NON
110
MODIFIER LE DEPHASAGE φ
DE 109
NON
111
ENREGISTRER LES FICHIERS DES VALEURS REPHASEES DE P(t) ET Ta(t) DU DEPHASAGE PRECEDENT
112
AJOUT A CHAQUE VALEUR DE P(t) D'UNE QUANTITE ΔP(t)=δxt
113
REGRESSION ET CALCUL DE CORRELATION ENTRE P(t) ET Ta(t)
114
CORRELATION ENTRE P(t) ET Ta(t) OPTIMALE ?
NON
115
MODIFIER LA VALEUR δ
OUI
116
ENREGISTRER LA VALEUR δ PRECEDEMMENT CALCULEE
117
| δ | = ε ?
OUI
NON
118
AFFICHER ABSENCE DE FUITE
119
AFFICHER LA VALEUR δ DONNANT LA FUITE PAR UNITE DE TEMPS


FIG.4

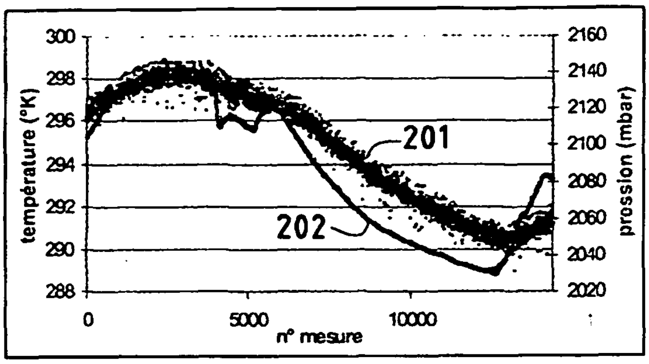


FIG.5

FIG.6

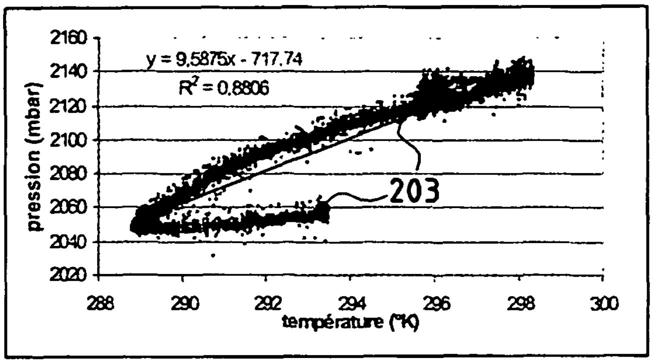


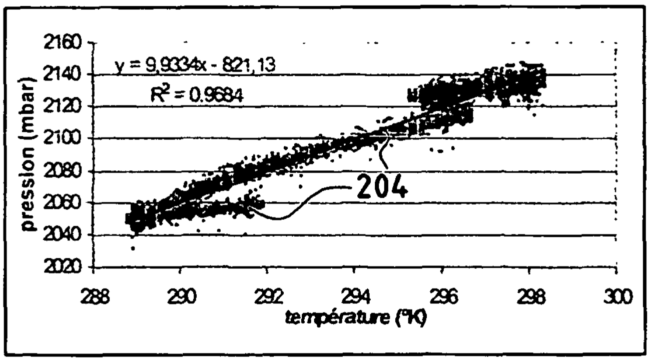


FIG.7

FIG.8

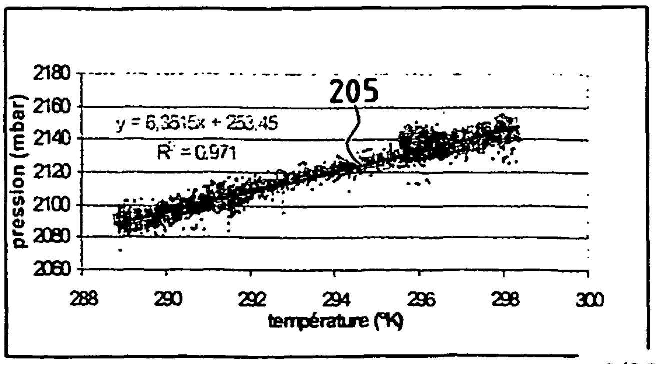

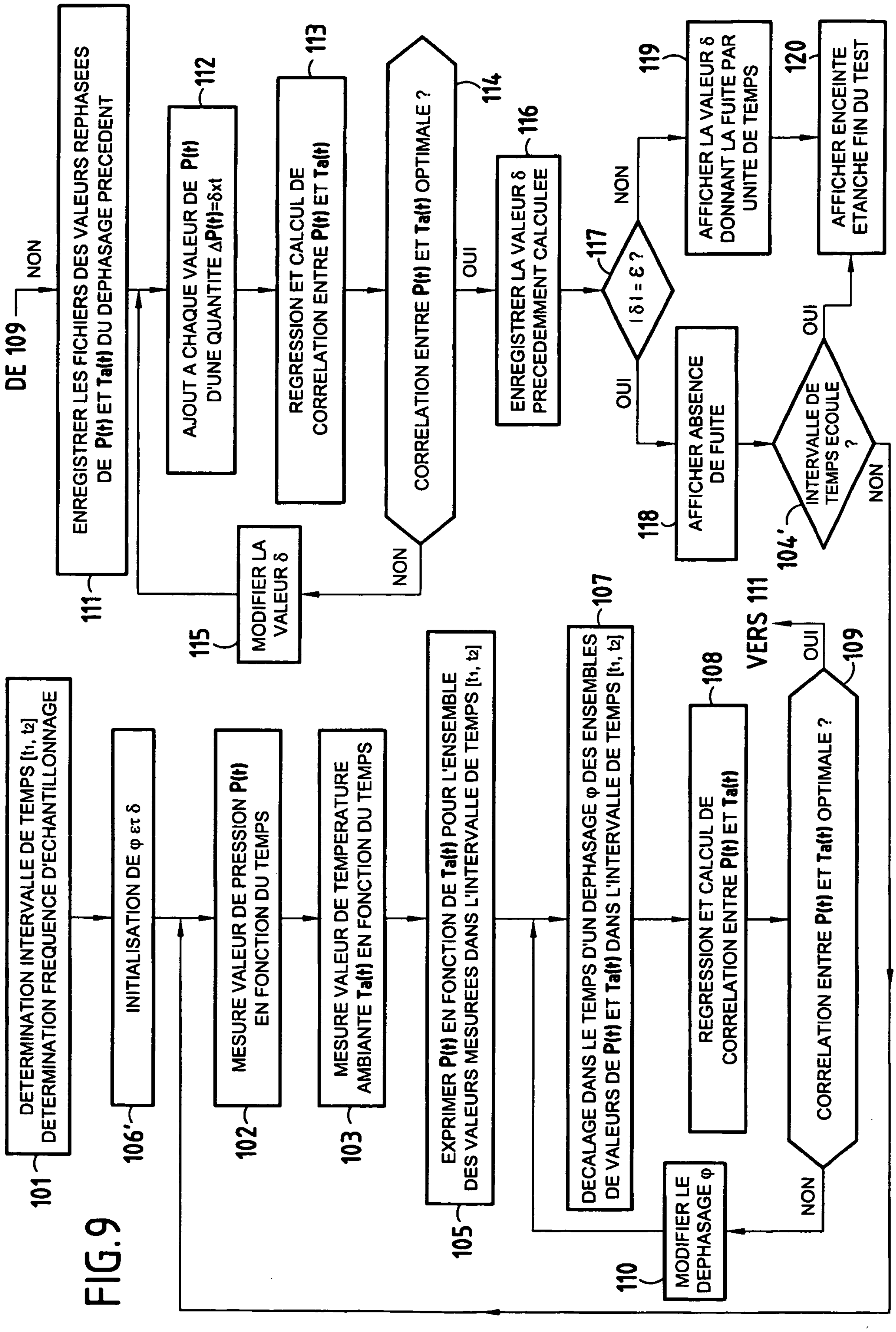
DETERMINATION INTERVALLE DE TEMPS [t1, t2] DETERMINATION FREQUENCE D'ECHANTILLONNAGE
101
INITIALISATION DE φ ετ δ
106'
MESURE VALEUR DE PRESSION P(t) EN FONCTION DU TEMPS
102
MESURE VALEUR DE TEMPERATURE AMBIANTE Ta(t) EN FONCTION DU TEMPS
103
EXPRIMER P(t) EN FONCTION DE Ta(t) POUR L'ENSEMBLE DES VALEURS MESUREES DANS L'INTERVALLE DE TEMPS [t1, t2]
105
DECALAGE DANS LE TEMPS D'UN DEPHASAGE φ DES ENSEMBLES DE VALEURS DE P(t) ET Ta(t) DANS L'INTERVALLE DE TEMPS [t1, t2]
107
REGRESSION ET CALCUL DE CORRELATION ENTRE P(t) ET Ta(t)
108
CORRELATION ENTRE P(t) ET Ta(t) OPTIMALE ?
109
OUI
VERS 111
NON
MODIFIER LE DEPHASAGE φ
110
DE 109
NON
ENREGISTRER LES FICHIERS DES VALEURS REPHASEES DE P(t) ET Ta(t) DU DEPHASAGE PRECEDENT
111
AJOUT A CHAQUE VALEUR DE P(t) D'UNE QUANTITE ΔP(t)=δxt
112
REGRESSION ET CALCUL DE CORRELATION ENTRE P(t) ET Ta(t)
113
CORRELATION ENTRE P(t) ET Ta(t) OPTIMALE ?
114
NON
MODIFIER LA VALEUR δ
115
OUI
ENREGISTRER LA VALEUR δ PRECEDEMMENT CALCULEE
116
\| δ \| = ε ?
117
OUI
AFFICHER ABSENCE DE FUITE
118
INTERVALLE DE TEMPS ECOULE ?
104'
NON
OUI
NON
AFFICHER LA VALEUR δ DONNANT LA FUITE PAR UNITE DE TEMPS
119
AFFICHER ENCEINTE ETANCHE FIN DU TEST
120

FIG.9

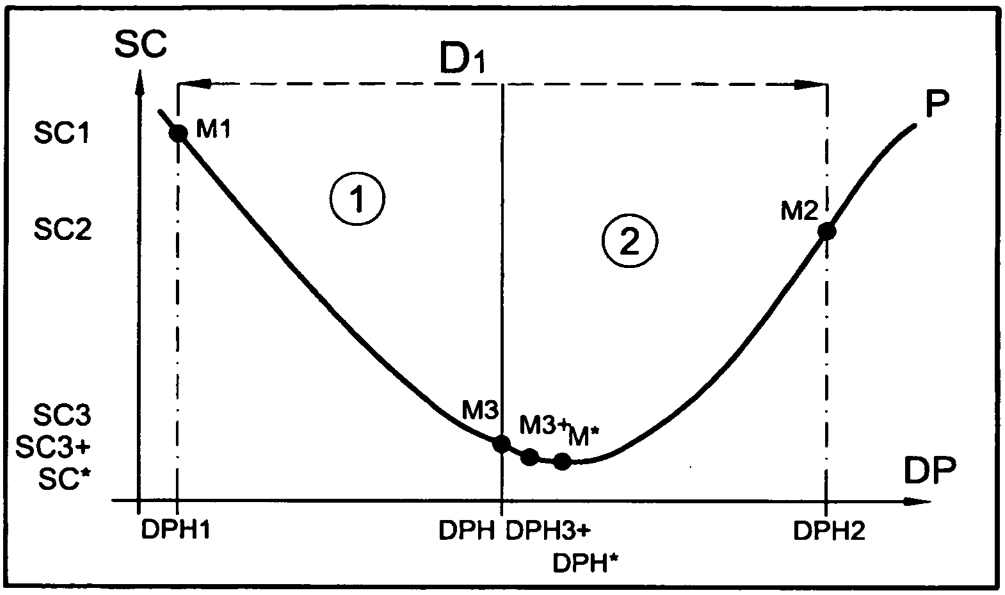
SC
D1
P
SC1
M1
1
SC2
2
M2
SC3
SC3+
SC*
M3
M3+
M*
DP
DPH1
DPH DPH3+
DPH*
DPH2

FIG.10

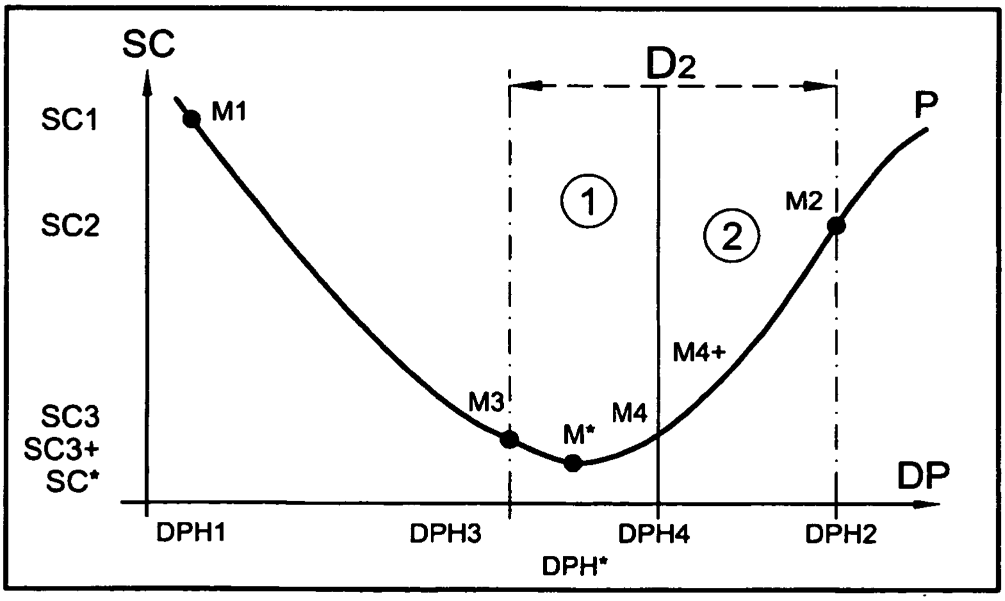
SC
D2
P
SC1
M1
1
SC2
2
M2
M4+
SC3
SC3+
SC*
M3
M*
M4
DP
DPH1
DPH3
DPH4
DPH2
DPH*

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4670847 A
- US 4675834 A